# EUROPEAN PATENT SPECIFICATION

(11) **EP 3 666 621 B1**
(45) Date of publication and mention of the grant of the patent: **06.11.2024**
(21) Application number: 19780132.7
(22) Date of filing: 04.09.2019
(51) Int. Cl.: B61L 27/50, B61L 27/20, B61L 15/00, B61L 23/34, B61L 27/70, G05B 23/02

(54) **PLATFORM AND METHOD FOR SMART ANALYSIS OF RAILWAY SIGNAL SYSTEM FAULTS**
PLATTFORM UND VERFAHREN ZUR INTELLIGENTEN ANALYSE EINES EISENBAHNSIGNALSYSTEMFEHLERS
PLATEFORME ET MÉTHODE D'ANALYSE INTELLIGENTE DE DÉFAILLANCES DE SYSTÈMES DE SIGNAUX FERROVIAIRES

(30) Priority: 19.10.2018 CN 201811222170
(43) Date of publication of application: 17.06.2020
(73) Proprietor: CRSC Research & Design Institute Group Co., Ltd., Beijing 100070 (CN)
(72) Inventor: HE, Dan, Beijing 100070 (CN); YAN, Youwei, Beijing 100070 (CN); YAN, Xiang, Beijing 100070 (CN)
(74) Representative: Meissner Bolte Partnerschaft mbB
(86) International application number: PCT/CN2019/104359
(87) International publication number: WO 2020/078137

(56) References cited:
- EP-A1- 2 990 295
- EP-A2- 1 150 526
- CN-A- 103 345 207
- CN-A- 104 683 413
- CN-A- 105 045 256
- CN-A- 105 159 283
- CN-A- 105 306 574
- CN-U- 206 086 764
- US-B1- 6 301 531

## Description

### TECHNICAL FIELD

The present invention relates to an analyzing method of a platform for intelligently analyzing a fault of a railway signal system and a system of a platform for intelligently analyzing a fault of a railway signal system.

### BACKGROUND

High-speed and safe operation of a railway train requires information transmission of a railway signal system and information transmission of train operation in addition to railway foundation lines and train states in good conditions. The existing railway signal system in China adopts Global System for Mobile Communications-Railway (GSM-R) which includes a vehicle-mounted subsystem, a ground subsystem, and other management subsystems such as a GSM-R network. Each subsystem is divided into multiple modules to collect various types of data of railways and train operation, so that the railway road conditions and the train running states can be monitored in real time, guaranteeing the train operation safety and improving the railway use efficiency.

However, the various types of professional monitoring data in the existing communication system are independent from each other leading to a lack of sharing, and the monitored data cannot be analyzed and compared is a comprehensive manner. Thus, when a fault occurs in the signal system, the only viable solution is to manually download the monitoring data in a subsystem related to the fault, and then analyze the monitoring data based on mere human experience, resulting in a lower handling efficiency. Furthermore, as the monitoring data continues to increase in amounts, the manual way gradually becomes not able to meet the various requirements of operation maintenance and fault handling.

In addition, when running, a high-speed railway vehicle needs to send dynamic balise message information to a balise device (fixed in the middle of rails) through a ground device. The vehicle would acquire the message information while passing through the balise device, and then perform operations such as speed control, continuing running, or stopping according to the message information. However, after sending the message information, the ground device is not able to determine whether the vehicle can normally perform an execution according to the message information, and the vehicle is also not able to determine whether the telegram information is normally sent by the ground device (there is a possibility of device failure during the process). In the existing system, the device information on either of the two sides can only be monitored independently through the ground or the vehicle, and closed-loop monitoring cannot be achieved.

Document US 6 301 531 B1 is directed to the prediction of faults based on calculating a trend from monitored data.

### SUMMARY

The present invention provides a platform for intelligently analyzing a railway signal system fault, aiming to solve the technical problem that monitoring data of the signal system are difficult to be comprehensively shared and automatically analyzed in the related art.

The invention is set out in the appended set of claims.

According to the analyzing method in the present invention, the vehicle data and the ground information data can be automatically extracted according to the characteristics of a fault, professional monitoring data of all modules in the railway signal system can be shared, the extracted vehicle data and ground information data are compared and analyzed by adopting a vehicle-ground integrated analysis and vehicle-ground closed-loop analysis, so that a comprehensive analysis of the vehicle-ground information data is made, such that a cause of the fault and a position of the fault are conveniently and quickly determined, and intelligentization of diagnosis of the railway signal system fault is effectively implemented. Additional features and advantages of the preset invention will be set forth in the description which follows, and in part will be apparent from the description, or may be understood by implementing the present invention. The objects and other advantages of the present invention may be implemented and obtained through structures set forth in the description, claims and drawings.

### BRIEF DESCRIPTION OF DRAWINGS

To better illustrate the technical solutions in the embodiments of the present invention or the technical solutions in the related art, drawings used in description of the embodiments or the related art will be briefly described below. Apparently, the drawings described below illustrate part of the embodiments of the present invention.
FIG. 1 is a basic flowchart illustrating intelligently analyzing a railway signal system fault according to the present invention.
FIG. 2 is a diagram illustrating a vehicle-mounted message sending path and fault causes represented by telegram parameters.

### DETAILED DESCRIPTION

To better illustrate the objects, technical solutions, and advantages of embodiments of the present invention, the technical solutions in the embodiments of the present invention will be described clearly and completely in conjunction with drawings in the embodiments of the present invention. Apparently, the described embodiments are part, not all, of embodiments of the present invention. Based on the embodiments of the present invention, all other embodiments obtained by those skilled in the art without creative work shall all fall in the scope of the present invention.

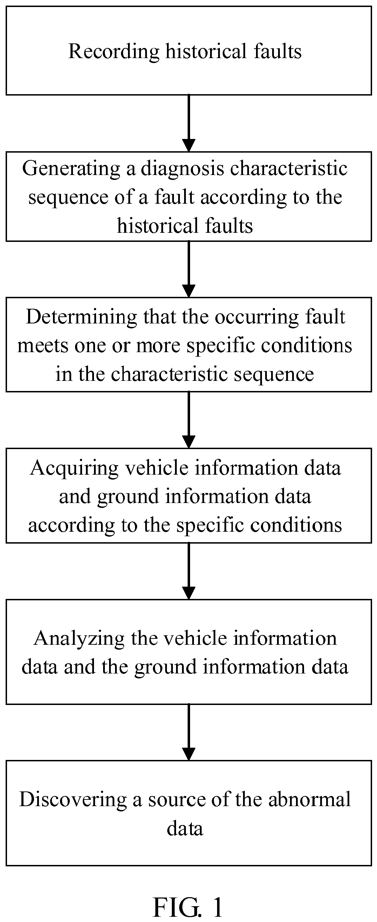

FIG. 1 is a basic flowchart illustrating intelligently analyzing a railway signaling system fault according to the present invention. As shown in the figure, the platform of the present embodiment records characteristics of faults which have occurred, and the characteristics of historical faults include: 1. a fault of poor communication quality between a train and the ground, where such fault specifically includes a decline in communication quality, a communication timeout, and a communication interruption; 2. a fault of occurrence of abnormality of a key parameter in a source message received by the train and sent from a ground device.

A diagnosis characteristic sequence of a fault is generated according to the characteristics of historical faults, and different diagnosis characteristic sequences may be formed for different faults.
1. The fault of a decline in communication quality between the train and the ground device is caused by the fact that the ground device sends repeated data frames to a vehicle. The fault of a communication timeout between the train and the ground is caused by the fact that a train device sends a large number of invalid data frames to the ground device. The fault of a communication interruption between the train and the ground device is caused by the fact that the ground device sends a disconnection data frame. These fault causes form a characteristic sequence of poor information communication quality between the ground device and the train.
   That is, the characteristic sequence of poor communication quality is as follows: a retransmission frame, an invalid data frame, and a disconnection frame.
2. For the occurrence of abnormality of a key parameter in a source message sent by the ground device and received by the train, the following cases exist. The key parameter in the source message received by the train is displayed as 253, which is caused by the fact that communication between a train control center and an interlocking device is interrupted or the temporary speed is restricted and no initialization is performed in the message delivery path. The key parameter in the source message received by the train is displayed as 0, which is caused by a fault of a device between a communication card and an electronic unit in the message delivery path. The key parameter in the source message received by the train is displayed as 252, which is caused by damage of the cable from the electronic unit of the ground device to a vehicle-mounted device in the message delivery path.

That is, a characteristic sequence of the occurrence of abnormality of a key parameter in a source message is as follows: the key parameter is displayed as 253, the key parameter is displayed as 0, and the key parameter is displayed as 252.

For a fault occurring during the operation of the train, the fault can be diagnosed according to the characteristics of the fault to be consistent with one or more specific conditions in the characteristic sequence, and train information data and ground information data are acquired according to the specific conditions. The train information and ground information data are acquired in the following manners. 1. Sending data of the train information and reply data of the ground information data are extracted through response times of a vehicle and a ground device. 2. A message key parameter of a sending end and a message key parameter of a receiving end are extracted through a sending path of a message.

The acquired train information data and ground information data are automatically analyzed in the following manners. 1. The acquired train information data and ground information data are analyzed frame by frame. 2. A closed-loop comparison between a message key parameter of the sending end and a key parameter of the receiving end is performed to achieve a data analysis.

Embodiment 1: During operation of a vehicle, the quality of communication between the vehicle and a ground device is poor, a log of a radio block center (RBC) is checked from the ground device, and the log is recorded in the following table.

| Number | Time | Log type | Event marking |
|---|---|---|---|
| 8259 | 2018-01-23 20:05:17 | stpdatatotrain | 0 |
| 8261 | 2018-01-23 20:05:18 | stpdisconnectind | 0 |
| 8283 | 2018-01-23 20:05:30 | stpconnectind | 0 |

As is seen from the above table, the RBC sends a disconnection frame to a link layer at 20:05:18.

For the specific cause of discovering the disconnection frame, information data in the RBC log and recording data at the train device end are extracted according to the response time of the train and response time of the RBC. The acquired RBC recording information and train protection system recording information are sorted in the following table.

| Time | Juridical recorder unit data in the RBC | Time | Recording data at an automatic train protection (ATP) end |
|---|---|---|---|
| | | 20:00:16 | The train sends a message |
| 20:01:26 | The RBC establishes connection with the train and communicates normally | | |
| 20:05:17 | The RBC receives a train position report M136 | | |
| 20:05:17 | The RBC replies to the train with M24 | | |
| 20:05:18 | The RBC disconnects from the train (Disconnection frame) | 20:05:18 | Receive a message 24 sent by the RBC |
| | | 20:05:20 | Initiate digital input (DI) disconnection (DISC:B) |
| 20:05:30 | Re-establish connection | | |

The train sends a message to the RBC at 20:00:16. The RBC receives the message from the train at 20:01:26, establishes a connection with the train to start normal communication. The RBC receives the train position report M136 at 20:05:17, and replies to the train with M24. The RBC disconnects from the train at 20:05:18, and meanwhile the train receives 24 sent by the RBC. The train sends DISC:B, i.e., initiates DI disconnection, at 20:05:20. The RBC establishes a connection with the train again at 20:05:30.

The acquired train information and ground information data are analyzed frame by frame and it is found that the RBC always normally communicates and replies to the train with a message. The RBC end processes normally. The vehicle-mounted ATP end at first normally communicates with the RBC, but the ATP end initiates DI disconnection in the middle of the process, so that the connection between the RBC and the train is disconnected. Thus, the communication between the vehicle and the ground is disconnected due to disconnection at the vehicle-mounted ATP end.

In the present embodiment, the platform acquires the train information data and the ground information data according to the fault, determines the cause of the fault through a frame-by-frame analysis of the data frames in the ground log and the vehicle log, and quickly locates the position where the fault occurs after the cause of the fault is found. An integrated analysis of the train information and the ground information data by the platform in the present embodiment is thus realized.

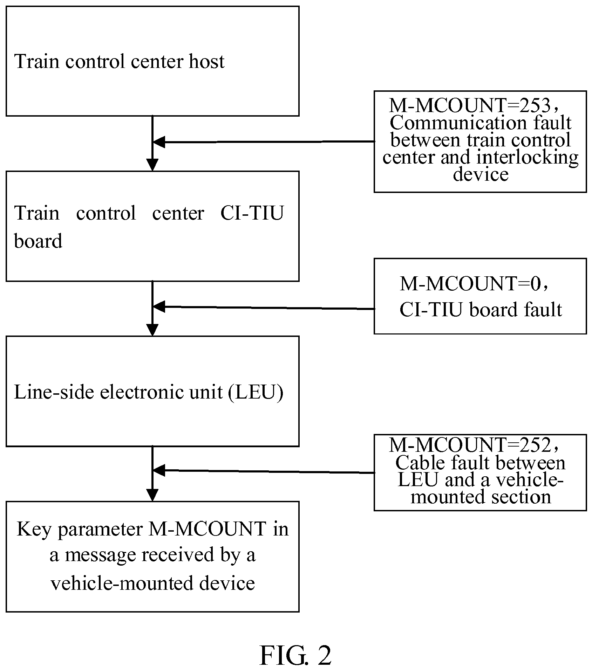

As shown in FIG. 2, when an existing train receives a message sent by the host of a train control center, the message needs to be delivered to a line-side electronic unit (LEU) through a train control center communication board (i.e., center interface- train interface unit, CI-TIU) and then delivered to the train by the LEU. During the process, if a fault occurs, a cause of the fault may be determined according to the key parameter M-MCOUNT in the message received by the train, but since the ground is only able to detect whether the message from the host of the train control center is normally sent, when the parameter M-MCOUNT in the message received by the train is abnormal, the ground device cannot determine the specific position where the fault occurs in the message delivery process, so that the fault cannot be located. In the present embodiment, the platform acquires balise information on an ATP vehicle-mounted side by accessing a central server of the railway model system to a database management system (DMS), simultaneously acquires information of a message sending end and information of a message receiving end to make a closed-loop comparison, and quickly analyzes a position of the fault. The cases described below are used for specific illustration.

Case 1: In the present embodiment, when the platform monitors that the key parameter in the message received by the train is abnormal, it is prompted that a fault occurs in the message delivery path. The platform in the present embodiment extracts data of the message sending end and data of the message receiving end according to the message delivery path, where the key parameter M-MCOUNT=255 in the message sent by the message sending end, i.e., the host of the train control center, is displayed, and the key parameter M-MCOUNT=253 in the message received in the message receiving end, i.e., the vehicle-mounted device, is displayed.

After a comparison between the message key parameter of the receiving end and the message key parameter of the sending end is performed, the message from the host of the train control center is found to be normally sent, and the cause of the fault is that communication between the train control center and an interlocking device is interrupted or that the temporary speed is restricted and no initialization is performed. That is, the abnormality is caused by the ground device, and maintenance personnel are quickly guided to repair the failed device.

Case 2: After a display abnormality of the key parameter in the message received by the train occurs, the platform in the present embodiment acquires the key parameter M-MCOUNT=255 in the message sent by the message sending end, i.e., the host of the train control center, and the key parameter M-MCOUNT=0 in the message received by the message receiving end, i.e., the vehicle-mounted device.

After a comparison between the message key parameter of the receiving end and the message key parameter of the sending end is made, it is concluded that the message of the host of the train control center is normally sent, and the cause of the fault is that a problem appears in the transmission channel between the TIU board card and the LEU. Since the channel facilities between the TIU board card and the LEU are located in the ground maintenance area, the specific position where the fault occurs may be located through the analysis result of the platform in combination with the train information, so that maintenance personnel are guided to quickly solve the fault.

Through the case 1 and the case 2, the platform in the present embodiment is able to simultaneously compare information of the message receiving end and information of the message sending end, and makes a closed-loop analysis of the ground information data and the train information. The position where the fault occurs in the message delivery path is thus found quickly.

When the platform in the present embodiment works, a recording unit records characteristics of historical faults; a generation unit generates a diagnosis characteristic sequence of a history fault according to the characteristics of the historical faults; after the current fault is input, a diagnostic unit compares the current fault with a diagnosis characteristic sequence of the historical fault so as to obtain the characteristic of the current fault; an extraction module acquires the ground information data and the train information data associated with the current fault according to the characteristic of the current fault; an analysis unit analyzes the ground information data and the train information data; a marking unit marks abnormal data analyzed by the analysis unit; and a user learns about a specific position of the fault according to a source of the abnormal data so as to obtain the specific cause of the fault.

In summary, the platform in the present embodiment is able to acquire train information and ground information data according to a fault, make an integrated analysis of the train information and the ground information data, and quickly find a cause of the fault. Furthermore, the platform is able to compare information of the message sending end and information of the message receiving end according to the fault of message abnormality, and make a closed-loop analysis. The platform for intelligently analyzing a railway signal system fault in the present invention is capable of comprehensively analyzing the train information data and the ground information data, and is able to find a cause of the fault generated during operation of the railway signal system and quickly locate a position of the fault, thus saving the maintenance cost.

Although the present invention has been described in detail with reference to the above-mentioned embodiments, it should be understood that the present invention is defined by the features of the independent claims.

## Claims

1. An analyzing method of a platform for intelligently analyzing a fault of a railway signal system, the analyzing method comprising
recording characteristics of historical faults of the railway signal system, wherein the characteristics of historical faults comprise a poor communication between a train and a ground device, and occurrence of abnormality of a key parameter in a source message received by a train and sent from a ground device, wherein the source message is sent from a host of a train control center, is delivered to a line-side electronic unit of the ground device through a center interface - train interface unit of the train control center and is delivered to a vehicle-mounted device of the train by the line-side electronic unit of the ground device;
generating a diagnosis characteristic sequence of a historical fault according to the characteristics of the historical faults,
wherein when the characteristics of the historical fault is the poor communication between the train and the ground device, the diagnosis characteristic sequence comprises a retransmission frame corresponding to a communication quality decline between the train and the ground device, invalid data frame corresponding to a communication timeout between the train and the ground device, and a disconnection frame corresponding to a communication interruption between the train and the ground device, and
when the characteristics of the historical fault is the occurrence of abnormality of the key parameter in the source message received by the train, the diagnosis characteristic sequence comprises that the key parameter is displayed as 253, the key parameter is displayed as 0, or the key parameter is displayed as 252, wherein the key parameter is a parameter M-MCOUNT in the source message, and the key parameter displayed as 253 indicates that a communication failure between the host of the train control center and the center interface - train interface unit of the train control center occurred, the key parameter displayed as 0 indicates that a device failure between the center interface - train interface unit of the train control center and the line-side electronic unit of the ground device occurred, the key parameter displayed as 252 indicates that a cable failure between the line-side electronic unit of the ground device and the vehicle-mounted device of the train occurred;
after a current fault of the railway signal system is input, comparing a diagnosis characteristic sequence of the current fault of the railway signal system with the diagnosis characteristic sequence of the historical fault to obtain a characteristic of the current fault;
acquiring train information data and ground information data corresponding to the current fault according to the characteristic of the current fault,
wherein when the characteristics of the current fault is the poor communication between the train and the ground device, the train information data and the ground information data are acquired respectively by extracting sending data of the train information according to a response time of the train and extracting reply data of the ground information data according to a response time of the ground device, and when the characteristic of the current fault is the occurrence of abnormality of the key parameter in the source message received by the train, the train information data and the ground information data are acquired by extracting the parameter M-MCOUNT in a message sent by the host of the train control center and the parameter M-MCOUNT in a message received by the vehicle-mounted device of the train;
analyzing the train information data and ground information data comprising analyzing the train information data and the ground information data frame by frame when the characteristic of the current fault is the poor communication between the train and the ground device, or, performing data analysis in the form of a closed-loop comparison between a message key parameter of a message sending end and the message key parameter of a message receiving end when the characteristic of the current fault is the occurrence of abnormality of the key parameter in the source message received by the train and sent from the ground device; and
marking a source of abnormal data.

2. A system of a platform for intelligently analyzing a fault of a railway signal system, comprising:
a recording unit, configured for recording characteristics of historical faults of the railway signal system, wherein the characteristics of historical faults comprise a poor communication between a train and a ground device, occurrence of abnormality of a key parameter in a source message received by a train and sent from a ground device, wherein the source message is sent from a host of a train control center, is delivered to a line-side electronic unit of the ground device through a center interface - train interface unit of the train control center and is delivered to a vehicle-mounted device of the train by the line-side electronic unit of the ground device;
a generation unit, configured for generating a diagnosis characteristic sequence of a historical fault,
wherein when the characteristics of the historical fault is the poor communication between the train and the ground device, the diagnosis characteristic sequence comprises a retransmission frame corresponding to a communication quality decline between the train and the ground device, invalid data corresponding to a communication timeout between the train and the ground device, and a disconnection frame corresponding to a communication interruption between the train and the ground device, and
when the characteristics of the historical fault is the occurrence of abnormality of a key parameter in the source message received by the train, the diagnosis characteristic sequence comprises that the key parameter is displayed as 253, the key parameter is displayed as 0, or the key parameter is displayed as 252, wherein the key parameter is a parameter M-MCOUNT in the source message, and the key parameter displayed as 253 indicates that a communication failure between the host of the train control center and the center interface - train interface unit of the train control center occurred, the key parameter displayed as 0 indicates that a device failure between the center interface - train interface unit of the train control center and the line-side electronic unit of the ground device occurred the key parameter displayed as 252 indicates that a cable failure between the line-side electronic unit of the ground device and the vehicle-mounted device of the train occurred;
a diagnostic unit, configured fo, after a current fault of the railway signal system is input, comparing a diagnosis characteristic sequence of the current fault of the railway signal system with the diagnosis characteristic sequence of the historical fault to obtain a characteristic of the current fault;
an extraction unit, configured for acquiring train information data and ground information data corresponding to the current fault according to the characteristic of the current fault, wherein when the characteristics of the current fault is the poor communication between the train and the ground device, the train information data and the ground information data are acquired respectively by extracting sending data of the train information according to a response time of the train and extracting reply data of the ground information data according to a response time of the ground device, and when the characteristic of the current fault is the occurrence of abnormality of the key parameter in the source message received by the train, the train information data and the ground information data are acquired by extracting the parameter M-MCOUNT in a message sent by the host of the train control center and the parameter M-MCOUNT in a message received by the vehicle-mounted device of the train;
an analysis unit, configured for analyzing the acquired train information data and ground information data comprising analyzing the train information data and the ground information data frame by frame when the characteristic of the current fault is the poor communication between the train and the ground device, or, performing data analysis in the form of a closed-loop comparison between a message key parameter of a message sending end and the message key parameter of a message receiving end when the characteristic of the current fault is the occurrence of abnormality of the key parameter in the source message received by the train and sent from the ground device; and
a marking unit, configured for marking a source of abnormal data.

## Patentansprüche

1. Analyseverfahren einer Plattform zum intelligenten Analysieren eines Fehlers eines Eisenbahnsignalsystems, wobei das Analyseverfahren Folgendes umfasst:
Aufzeichnen von Eigenschaften historischer Fehler des Eisenbahnsignalsystems, wobei die Eigenschaften historischer Fehler eine schlechte Kommunikation zwischen einem Zug und einer Bodenvorrichtung und ein Auftreten einer Anomalie eines Schlüsselparameters in einer durch einen Zug empfangenen und von einer Bodenvorrichtung gesendeten Quellnachricht umfassen, wobei die Quellnachricht von einem Host eines Zugkontrollzentrums gesendet wird, durch eine Zentralschnittstellen-/Zugschnittstelleneinheit des Zugkontrollzentrums an eine streckenseitige Elektronikeinheit der Bodenvorrichtung übermittelt wird und durch die streckenseitige Elektronikeinheit der Bodenvorrichtung an eine fahrzeugmontierte Vorrichtung des Zuges übermittelt wird;
Erzeugen einer Diagnoseeigenschaftssequenz eines historischen Fehlers gemäß den Eigenschaften der historischen Fehler,
wobei, wenn die Eigenschaft des historischen Fehlers die schlechte Kommunikation zwischen dem Zug und der Bodenvorrichtung ist, die Diagnoseeigenschaftssequenz einen Weiterübertragungsrahmen, der einer Verschlechterung der Kommunikationsqualität zwischen dem Zug und der Bodenvorrichtung entspricht, einen ungültigen Datenrahmen, der einer Zeitüberschreitung der Kommunikation zwischen dem Zug und der Bodenvorrichtung entspricht, und einen Trennungsrahmen, der einer Kommunikationsunterbrechung zwischen dem Zug und der Bodenvorrichtung entspricht, umfasst und
wenn die Eigenschaft des historischen Fehlers das Auftreten einer Anomalie des Schlüsselparameters in der durch den Zug empfangenen Quellnachricht ist, die Diagnoseeigenschaftssequenz umfasst, dass der Schlüsselparameter als 253 angezeigt wird, der Schlüsselparameter als 0 angezeigt wird oder der Schlüsselparameter als 252 angezeigt wird, wobei der Schlüsselparameter ein Parameter M-MCOUNT in der Quellnachricht ist und der als 253 angezeigte Schlüsselparameter angibt, dass ein Kommunikationsausfall zwischen dem Host des Zugkontrollzentrums und der Zentralschnittstellen-/Zugschnittstelleneinheit des Zugkontrollzentrums aufgetreten ist, der als 0 angezeigte Schlüsselparameter angibt, dass ein Vorrichtungsausfall zwischen der Zentralschnittstellen-/Zugschnittstelleneinheit des Zugkontrollzentrums und der streckenseitigen Elektronikeinheit der Bodenvorrichtung aufgetreten ist, der als 252 angezeigte Schlüsselparameter angibt, dass ein Kabelausfall zwischen der streckenseitigen Elektronikeinheit der Bodenvorrichtung und der fahrzeugmontierten Vorrichtung des Zuges aufgetreten ist;
nachdem ein aktueller Fehler des Eisenbahnsignalsystems eingegeben wird, Vergleichen einer Diagnoseeigenschaftssequenz des aktuellen Fehlers des Eisenbahnsignalsystems mit der Diagnoseeigenschaftssequenz des historischen Fehlers, um eine Eigenschaft des aktuellen Fehlers zu erhalten;
Erfassen von Zuginformationsdaten und Bodeninformationsdaten, die dem aktuellen Fehler entsprechen, gemäß der Eigenschaft des aktuellen Fehlers,
wobei, wenn die Eigenschaft des aktuellen Fehlers die schlechte Kommunikation zwischen dem Zug und der Bodenvorrichtung ist, die Zuginformationsdaten und die Bodeninformationsdaten jeweils durch Extrahieren von Sendedaten der Zuginformationen gemäß einer Reaktionszeit des Zuges und Extrahieren von Antwortdaten der Bodeninformationsdaten gemäß einer Reaktionszeit der Bodenvorrichtung erfasst werden, und wenn die Eigenschaft des aktuellen Fehlers das Auftreten einer Anomalie des Schlüsselparameters in der durch den Zug empfangenen Quellnachricht ist, die Zuginformationsdaten und die Bodeninformationsdaten durch Extrahieren des Parameters M-MCOUNT in einer durch den Host des Zugkontrollzentrums gesendeten Nachricht und des Parameters M-MCOUNT in einer durch die fahrzeugmontierte Vorrichtung des Zuges empfangenen Nachricht erfasst werden;
Analysieren der Zuginformationsdaten und der Bodeninformationsdaten, was Analysieren der Zuginformationsdaten und der Bodeninformationsdaten Rahmen für Rahmen, wenn die Eigenschaft des aktuellen Fehlers die schlechte Kommunikation zwischen dem Zug und der Bodenvorrichtung ist, oder Durchführen einer Datenanalyse in Form eines Closed-Loop-Vergleichs zwischen einem Nachrichtenschlüsselparameter eines Nachrichtensendeendes und dem Nachrichtenschlüsselparameter eines Nachrichtenempfangsendes, wenn die Eigenschaft des aktuellen Fehlers das Auftreten einer Anomalie des Schlüsselparameters in der durch den Zug empfangenen und von der Bodenvorrichtung gesendeten Quellnachricht ist, umfasst; und
Markieren einer Quelle anormaler Daten.

2. System einer Plattform zum intelligenten Analysieren eines Fehlers eines Eisenbahnsignalsystems, umfassend:
eine Aufzeichnungseinheit, die dazu konfiguriert ist, Eigenschaften historischer Fehler des Eisenbahnsignalsystems aufzuzeichnen, wobei die Eigenschaften historischer Fehler eine schlechte Kommunikation zwischen einem Zug und einer Bodenvorrichtung, ein Auftreten einer Anomalie eines Schlüsselparameters in einer durch einen Zug empfangenen und von einer Bodenvorrichtung gesendeten Quellnachricht umfassen, wobei die Quellnachricht von einem Host eines Zugkontrollzentrums gesendet wird, durch eine Zentralschnittstellen-/Zugschnittstelleneinheit des Zugkontrollzentrums an eine streckenseitige Elektronikeinheit der Bodenvorrichtung übermittelt wird und durch die streckenseitige Elektronikeinheit der Bodenvorrichtung an eine fahrzeugmontierte Vorrichtung des Zuges übermittelt wird;
eine Erzeugungseinheit, die dazu konfiguriert ist, eine Diagnoseeigenschaftssequenz eines historischen Fehlers zu erzeugen,
wobei, wenn die Eigenschaft des historischen Fehlers die schlechte Kommunikation zwischen dem Zug und der Bodenvorrichtung ist, die Diagnoseeigenschaftssequenz einen Weiterübertragungsrahmen, der einer Verschlechterung der Kommunikationsqualität zwischen dem Zug und der Bodenvorrichtung entspricht, ungültige Daten, die einer Zeitüberschreitung der Kommunikation zwischen dem Zug und der Bodenvorrichtung entsprechen, und einen Trennungsrahmen, der einer Kommunikationsunterbrechung zwischen dem Zug und der Bodenvorrichtung entspricht, umfasst und
wenn die Eigenschaft des historischen Fehlers das Auftreten einer Anomalie eines Schlüsselparameters in der durch den Zug empfangenen Quellnachricht ist, die Diagnoseeigenschaftssequenz umfasst, dass der Schlüsselparameter als 253 angezeigt wird, der Schlüsselparameter als 0 angezeigt wird oder der Schlüsselparameter als 252 angezeigt wird, wobei der Schlüsselparameter ein Parameter M-MCOUNT in der Quellnachricht ist und der als 253 angezeigte Schlüsselparameter angibt, dass ein Kommunikationsausfall zwischen dem Host des Zugkontrollzentrums und der Zentralschnittstellen-/Zugschnittstelleneinheit des Zugkontrollzentrums aufgetreten ist, der als 0 angezeigte Schlüsselparameter angibt, dass ein Vorrichtungsausfall zwischen der Zentralschnittstellen-/Zugschnittstelleneinheit des Zugkontrollzentrums und der streckenseitigen Elektronikeinheit der Bodenvorrichtung aufgetreten ist, der als 252 angezeigte Schlüsselparameter angibt, dass ein Kabelausfall zwischen der streckenseitigen Elektronikeinheit der Bodenvorrichtung und der fahrzeugmontierten Vorrichtung des Zuges aufgetreten ist;
eine Diagnoseeinheit, die dazu konfiguriert ist, nachdem ein aktueller Fehler des Eisenbahnsignalsystems eingegeben wird, eine Diagnoseeigenschaftssequenz des aktuellen Fehlers des Eisenbahnsignalsystems mit der Diagnoseeigenschaftssequenz des historischen Fehlers zu vergleichen, um eine Eigenschaft des aktuellen Fehlers zu erhalten;
eine Extraktionseinheit, die dazu konfiguriert ist, Zuginformationsdaten und Bodeninformationsdaten, die dem aktuellen Fehler entsprechen, gemäß der Eigenschaft des aktuellen Fehlers zu erfassen, wobei, wenn die Eigenschaft des aktuellen Fehlers die schlechte Kommunikation zwischen dem Zug und der Bodenvorrichtung ist, die Zuginformationsdaten und die Bodeninformationsdaten jeweils durch Extrahieren von Sendedaten der Zuginformationen gemäß einer Reaktionszeit des Zuges und Extrahieren von Antwortdaten der Bodeninformationsdaten gemäß einer Reaktionszeit der Bodenvorrichtung erfasst werden, und wenn die Eigenschaft des aktuellen Fehlers das Auftreten einer Anomalie des Schlüsselparameters in der durch den Zug empfangenen Quellnachricht ist, die Zuginformationsdaten und die Bodeninformationsdaten durch Extrahieren des Parameters M-MCOUNT in einer durch den Host des Zugkontrollzentrums gesendeten Nachricht und des Parameters M-MCOUNT in einer durch die fahrzeugmontierte Vorrichtung des Zuges empfangenen Nachricht erfasst werden;
eine Analyseeinheit, die dazu konfiguriert ist, die erfassten Zuginformationsdaten und Bodeninformationsdaten zu analysieren, was Analysieren der Zuginformationsdaten und der Bodeninformationsdaten Rahmen für Rahmen, wenn die Eigenschaft des aktuellen Fehlers die schlechte Kommunikation zwischen dem Zug und der Bodenvorrichtung ist, oder Durchführen einer Datenanalyse in Form eines Closed-Loop-Vergleichs zwischen einem Nachrichtenschlüsselparameter eines Nachrichtensendeendes und dem Nachrichtenschlüsselparameter eines Nachrichtenempfangsendes, wenn die Eigenschaft des aktuellen Fehlers das Auftreten einer Anomalie des Schlüsselparameters in der durch den Zug empfangenen und von der Bodenvorrichtung gesendeten Quellnachricht ist, umfasst; und
eine Markierungseinheit, die dazu konfiguriert ist, eine Quelle anormaler Daten zu markieren.

## Revendications

1. Procédé d'analyse d'une plate-forme pour l'analyse intelligente d'un défaut d'un système de signalisation ferroviaire, le procédé d'analyse comprenant :
l'enregistrement de caractéristiques de défauts historiques du système de signalisation ferroviaire, dans lequel les caractéristiques de défauts historiques comprennent une mauvaise communication entre un train et un dispositif au sol, et la survenue d'une anomalie d'un paramètre clé dans un message source reçu par un train et envoyé depuis un dispositif au sol, dans lequel le message source est envoyé par un hôte d'un centre de contrôle des trains, est délivré à une unité électronique côté ligne du dispositif au sol par l'intermédiaire d'une unité interface centrale-interface de train du centre de contrôle des trains et est délivré à un dispositif embarqué du train par l'unité électronique côté ligne du dispositif au sol ;
la génération d'une séquence de caractéristiques de diagnostic d'un défaut historique selon les caractéristiques des défauts historiques,
dans lequel, lorsque la caractéristique du défaut historique est la mauvaise communication entre le train et le dispositif au sol, la séquence de caractéristiques de diagnostic comprend une trame de retransmission correspondant à une baisse de qualité de communication entre le train et le dispositif au sol, une trame de données non valides correspondant à un dépassement de délai de communication entre le train et le dispositif au sol, et une trame de déconnexion correspondant à une interruption de communication entre le train et le dispositif au sol, et
lorsque la caractéristique du défaut historique est la survenue d'une anomalie du paramètre clé dans le message source reçu par le train, la séquence de caractéristiques de diagnostic comprend que le paramètre clé est affiché comme étant 253, le paramètre clé est affiché comme étant 0 ou le paramètre clé est affiché comme étant 252, dans lequel le paramètre clé est un paramètre M-MCOUNT dans le message source, et le paramètre clé affiché comme étant 253 indique qu'une défaillance de communication est survenue entre l'hôte du centre de contrôle des trains et l'unité interface centrale-interface de train du centre de contrôle des trains, le paramètre clé affiché comme étant 0 indique qu'une défaillance de dispositif est survenue entre l'unité interface centrale-interface de train du centre de contrôle des trains et l'unité électronique côté ligne du dispositif au sol, le paramètre clé affiché comme étant 252 indique qu'une défaillance de câble est survenue entre l'unité électronique côté ligne du dispositif au sol et le dispositif embarqué du train ;
après qu'un défaut actuel du système de signalisation ferroviaire est entré, la comparaison d'une séquence de caractéristiques de diagnostic du défaut actuel du système de signalisation ferroviaire avec la séquence de caractéristiques de diagnostic du défaut historique afin d'obtenir une caractéristique de défaut actuel ;
l'acquisition de données d'information de train et de données d'information au sol correspondant au défaut actuel selon la caractéristique du défaut actuel,
lorsque la caractéristique du défaut actuel est la mauvaise communication entre le train et le dispositif au sol, les données d'information de train et les données d'information au sol sont acquises respectivement en extrayant des données d'envoi des informations de train selon un temps de réponse du train et en extrayant des données de réponse des données d'information au sol selon un temps de réponse du dispositif au sol, et lorsque la caractéristique du défaut actuel est la survenue d'une anomalie du paramètre clé dans le message source reçu par le train, les données d'information de train et les données d'information au sol sont acquises en extrayant le paramètre M-MCOUNT dans un message envoyé par l'hôte du centre de contrôle des trains et le paramètre M-MCOUNT dans un message reçu par le dispositif embarqué du train ;
l'analyse des données d'information de train et des données d'information au sol comprenant l'analyse des données d'information de train et des données d'information au sol trame par trame lorsque la caractéristique du défaut actuel est la mauvaise communication entre le train et le dispositif au sol, ou, la réalisation d'une analyse de données sous la forme d'une comparaison en boucle fermée entre un paramètre clé de message d'une extrémité d'envoi de message et le paramètre clé de message d'une extrémité de réception de message lorsque la caractéristique du défaut actuel est la survenue d'une anomalie du paramètre clé dans le message source reçu par le train et envoyé depuis le dispositif au sol ; et
le marquage d'une source de données anormales.

2. Système de plate-forme d'analyse intelligente d'un défaut d'un système de signalisation ferroviaire comprenant :
une unité d'enregistrement, configurée pour enregistrer des caractéristiques de défauts historiques du système de signalisation ferroviaire, dans lequel les caractéristiques de défauts historiques comprennent une mauvaise communication entre un train et un dispositif au sol, la survenue d'une anomalie d'un paramètre clé dans un message source reçu par un train et envoyé depuis un dispositif au sol, dans lequel le message source est envoyé par un hôte d'un centre de contrôle des trains, est délivré à une unité électronique côté ligne du dispositif au sol par l'intermédiaire d'une unité interface centrale-interface de train du centre de contrôle des trains et est délivré à un dispositif embarqué du train par l'unité électronique côté ligne du dispositif au sol ;
une unité de génération, configurée pour générer une séquence de caractéristiques de diagnostic d'un défaut historique,
dans lequel, lorsque la caractéristique du défaut historique est la mauvaise communication entre le train et le dispositif au sol, la séquence de caractéristiques de diagnostic comprend une trame de retransmission correspondant à une baisse de qualité de communication entre le train et le dispositif au sol, des données non valides correspondant à un dépassement de délai de communication entre le train et le dispositif au sol, et une trame de déconnexion correspondant à une interruption de communication entre le train et le dispositif au sol, et
lorsque la caractéristique du défaut historique est la survenue d'une anomalie d'un paramètre clé dans le message source reçu par le train, la séquence de caractéristiques de diagnostic comprend que le paramètre clé est affiché comme étant 253, le paramètre clé est affiché comme étant 0 ou le paramètre clé est affiché comme étant 252, dans lequel le paramètre clé est un paramètre M-MCOUNT dans le message source, et le paramètre clé affiché comme étant 253 indique qu'une défaillance de communication est survenue entre l'hôte du système de contrôle des trains et l'unité interface centrale-interface de train du centre de contrôle des trains, le paramètre clé affiché comme étant 0 indique qu'une défaillance de dispositif est survenue entre l'unité interface centrale-interface de train du centre de contrôle des trains et l'unité électronique côté ligne du dispositif au sol, le paramètre clé affiché comme étant 252 indique qu'une défaillance de câble est survenue entre l'unité électronique côté ligne du dispositif au sol et le dispositif embarqué du train ;
une unité de diagnostic, configurée pour, après s'un défaut actuel du système de signalisation ferroviaire est entré, comparer une séquence de caractéristiques de diagnostic du défaut actuel du système de signalisation ferroviaire avec la séquence de caractéristiques de diagnostic du défaut historique afin d'obtenir une caractéristique de défaut actuel ;
une unité d'extraction, configurée pour acquérir des données d'information de train et des données d'information au sol correspondant au défaut actuel selon la caractéristique du défaut actuel, dans lequel, lorsque la caractéristique du défaut actuel est la mauvaise communication entre le train et le dispositif au sol, les données d'information de train et les données d'information au sol sont acquises respectivement en extrayant des données d'envoi des informations de train selon un temps de réponse du train et en extrayant des données de réponse des données d'information au sol selon un temps de réponse du dispositif au sol, et lorsque la caractéristique du défaut actuel est la survenue d'une anomalie du paramètre clé dans le message source reçu par le train, les données d'information de train et les données d'information au sol sont acquises en extrayant le paramètre M-MCOUNT dans un message envoyé par l'hôte du centre de contrôle des trains et le paramètre M-MCOUNT dans un message reçu par le dispositif embarqué du train ;
une unité d'analyse, configurée pour analyser les données d'information de train et les données d'information au sol acquises, comprenant l'analyse des données d'information de train et des données d'information au sol trame par trame lorsque la caractéristique du défaut actuel est la mauvaise communication entre le train et le dispositif au sol, ou, la réalisation d'une analyse de données sous la forme d'une comparaison en boucle fermée entre un paramètre clé de message d'une extrémité d'envoi de message et le paramètre clé de message d'une extrémité de réception de message lorsque la caractéristique du défaut actuel est la survenue d'une anomalie du paramètre clé dans le message source reçu par le train et envoyé depuis le dispositif au sol ; et
une unité de marquage, configurée pour marquer une source de données anormales.
